# EUROPEAN PATENT APPLICATION

(11) **EP 4 730 230 A1**
(43) Date of publication of application: **22.04.2026**
(21) Application number: 25207706.0
(22) Date of filing: 09.10.2025
(51) Int. Cl.: G06Q 10/063, G06N 3/00, G06N 3/0475, G06N 20/00, G06Q 10/20, G06Q 50/04

(54) **GENERATIVE AI INDUSTRIAL DIGITAL INSIGHTS AND RECOMMENDATIONS**

(30) Priority: 18.10.2024 US 202418919994
(71) Applicant: Rockwell Automation Technologies, Inc., Mayfield Heights, OH 44124 (US)
(72) Inventor: Mehrotra, Abhishek, Mayfield Heights, OH, 44124 (US); Taylor, Steven P., Mayfield Heights, OH, 44124 (US); Wiant, Jessica L., Mayfield Heights, OH, 44124 (US); Ravindranath, Aparna, Mayfield Heights, OH, 44124 (US); Flores, Britney, Mayfield Heights, OH, 44124 (US)
(74) Representative: Grünecker Patent- und Rechtsanwälte PartG mbB

(57) **Abstract**

An industrial digital insights system acts as an interactive assistant that leverages generative artificial intelligence (AI) techniques to suggest solutions to industrial alarm conditions or other performance problems based on earlier documented solutions, thereby expediting the process of finding alarm resolutions. The system enhances a user's prompt with relevant contextual data retrieved from stored documentation as well as relevant past chat histories to assist the system's generative AI model in recommending accurate resolutions to alarm conditions or performance issues described by the user's prompt. The system can also leverage generative AI to formulate and present proactive asset management recommendations based on analysis of the customer's assets and their usage.

## Description

### TECHNICAL FIELD

The subject matter disclosed herein relates generally to industrial automation systems, and, for example, to digitally assisted industrial asset management.

### BACKGROUND ART

Maintenance and troubleshooting of a plant's industrial control systems and their associated machines and devices are typically carried out by on-site service engineers or machine operators. While some types of routine machine alarm or fault conditions can be easily addressed, unfamiliar alarm conditions or system performance issues require the service personnel to expend considerable time and effort finding resolutions to the problems. These resolution efforts can include referencing device or software manuals or contacting a vendor's customer support personnel for assistance in diagnosing and resolving the condition.

The above-described deficiencies of current approaches to resolving industrial alarm conditions and performance issues are merely intended to provide an overview of some of the problems of current technology, and are not intended to be exhaustive. Other problems with the state of the art, and corresponding benefits of some of the various non-limiting embodiments described herein, may become further apparent upon review of the following detailed description.

### BRIEF DESCRIPTION

The following presents a simplified summary in order to provide a basic understanding of some aspects described herein. This summary is not an extensive overview nor is it intended to identify key/critical elements or to delineate the scope of the various aspects described herein. Its sole purpose is to present some concepts in a simplified form as a prelude to the more detailed description that is presented later.

In one or more embodiments, a system is provided, comprising a device interface component configured to collect identification data from industrial assets in operation within an industrial facility and to record asset data identifying the industrial assets and functional relationships between the industrial assets based on the identification data; a generative artificial intelligence (AI) component configured to, based on analysis of the asset data and a response prompted from a generative AI model, identify a potential operational or security risk associated with the industrial assets and a corresponding recommended action predicted to mitigate the potential operational or security risk; and a user interface component configured to render, on a client device, the recommended action as a natural language recommendation.

Also, one or more embodiments provide a method, comprising collecting, by a system comprising a processor, identification data from industrial assets in operation within an industrial facility and to record asset data identifying the industrial assets and functional relationships between the industrial assets based on the identification data; identifying, by the system based on analysis of the asset data and a response prompted from a generative artificial intelligence (AI) model, a potential operational or security risk associated with the industrial assets and a corresponding recommended countermeasure predicted to mitigate the potential operational or security risk; and rendering, by the system on a client device, the recommended countermeasure as a natural language recommendation.

Also, according to one or more embodiments, a non-transitory computer-readable medium is provided having stored thereon instructions that, in response to execution, cause a system to perform operations, the operations comprising collecting identification data from industrial assets in operation within an industrial facility and to record asset data identifying the industrial assets and functional relationships between the industrial assets based on the identification data; identifying, based on analysis of the asset data and a response prompted from a generative artificial intelligence (AI) model, a potential operational or security risk associated with the industrial assets and a corresponding recommended countermeasure predicted to mitigate the potential operational or security risk; and rendering, on a client device, the recommended countermeasure as a natural language recommendation.

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.

### BRIEF DESCRIPTION OF THE DRAWINGS

FIG. 1 is a block diagram of an example industrial control environment.
FIG. 2 is a block diagram of an example industrial digital insights system.
FIG. 3 is a diagram illustrating an example architecture of the industrial digital insights system.
FIG. 4 is a diagram illustrating enhancement of a user prompt with contextual data and previous chat history data prior to submission to a generative AI model.
FIG. 5 is a diagram illustrating prompting of a generative AI model by a generative AI component of the digital insights system.
FIG. 6 is an example chat window that can be generated by the digital insights system and used to interact with the system.
FIG. 7 is a diagram illustrating delivery and storage of the system's response to a user prompt.
FIG. 8 is a diagram illustrating an example architecture in which a context retrieval component and a generative AI component are used to detect and respond to alarms or other industrial asset performance issues in substantially real-time.
FIG. 9 is a flowchart of an example methodology for generating and delivering dynamic asset management recommendations using generative AI-assisted analysis.
FIG. 10 is an example computing environment.
FIG. 11 is an example networking environment.

### DETAILED DESCRIPTION

The subject disclosure is now described with reference to the drawings, wherein like reference numerals are used to refer to like elements throughout. In the following description, for purposes of explanation, numerous specific details are set forth in order to provide a thorough understanding thereof. It may be evident, however, that the subject disclosure can be practiced without these specific details. In other instances, well-known structures and devices are shown in block diagram form in order to facilitate a description thereof.

As used in this application, the terms "component," "system," "platform," "layer," "controller," "terminal," "station," "node," "interface" are intended to refer to a computer-related entity or an entity related to, or that is part of, an operational apparatus with one or more specific functionalities, wherein such entities can be either hardware, a combination of hardware and software, software, or software in execution. For example, a component can be, but is not limited to being, a process running on a processor, a processor, a hard disk drive, multiple storage drives (of optical or magnetic storage medium) including affixed (e.g., screwed or bolted) or removable affixed solid-state storage drives; an object; an executable; a thread of execution; a computer-executable program, and/or a computer. By way of illustration, both an application running on a server and the server can be a component. One or more components can reside within a process and/or thread of execution, and a component can be localized on one computer and/or distributed between two or more computers. Also, components as described herein can execute from various computer readable storage media having various data structures stored thereon. The components may communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry which is operated by a software or a firmware application executed by a processor, wherein the processor can be internal or external to the apparatus and executes at least a part of the software or firmware application. As yet another example, a component can be an apparatus that provides specific functionality through electronic components without mechanical parts, the electronic components can include a processor therein to execute software or firmware that provides at least in part the functionality of the electronic components. As further yet another example, interface(s) can include input/output (I/O) components as well as associated processor, application, or Application Programming Interface (API) components. While the foregoing examples are directed to aspects of a component, the exemplified aspects or features also apply to a system, platform, interface, layer, controller, terminal, and the like.

As used herein, the terms "to infer" and "inference" refer generally to the process of reasoning about or inferring states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

In addition, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Furthermore, the term "set" as employed herein excludes the empty set; e.g., the set with no elements therein. Thus, a "set" in the subject disclosure includes one or more elements or entities. As an illustration, a set of controllers includes one or more controllers; a set of data resources includes one or more data resources; etc. Likewise, the term "group" as utilized herein refers to a collection of one or more entities; e.g., a group of nodes refers to one or more nodes.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches also can be used.

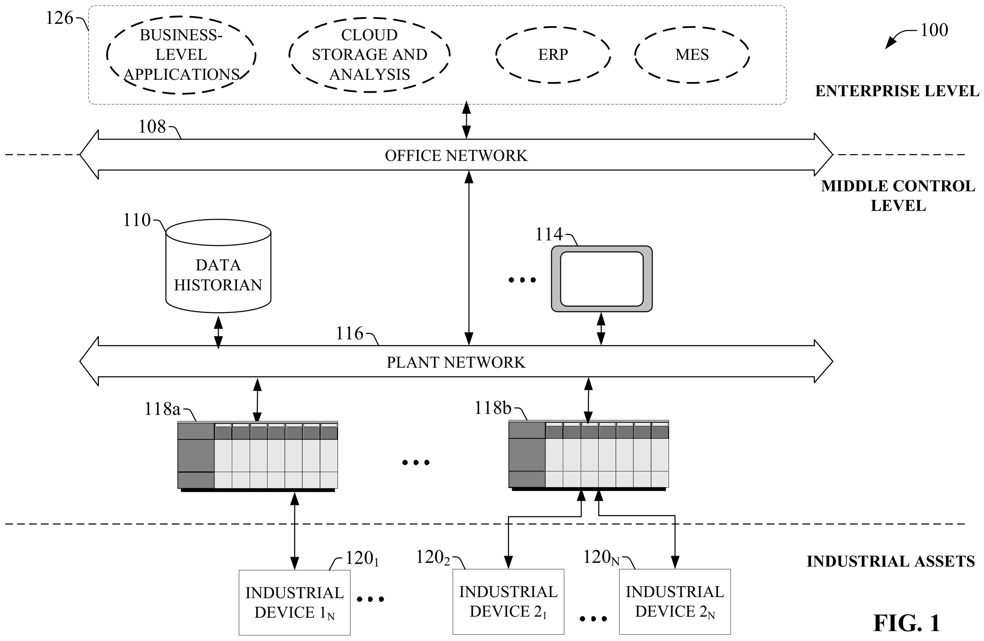

FIG. 1 is a block diagram of an example industrial control environment 100. In this example, a number of industrial controllers 118 are deployed throughout an industrial plant environment to monitor and control respective industrial systems or processes relating to product manufacture, machining, motion control, batch processing, material handling, or other such industrial functions. Industrial controllers 118 typically execute respective control programs to facilitate monitoring and control of industrial devices 120 making up the controlled industrial assets or systems (e.g., industrial machines). One or more industrial controllers 118 may also comprise a soft controller executed on a personal computer or other hardware platform, or on a cloud platform. Some hybrid devices may also combine controller functionality with other functions (e.g., visualization). The control programs executed by industrial controllers 118 can comprise substantially any type of control code capable of processing input signals read from the industrial devices 120 and controlling output signals generated by the industrial controllers 118, including but not limited to ladder logic, sequential function charts, function block diagrams, or structured text.

Industrial devices 120 may include both input devices that provide data relating to the controlled industrial systems to the industrial controllers 118, and output devices that respond to control signals generated by the industrial controllers 118 to control aspects of the industrial systems. Example input devices can include telemetry devices (e.g., temperature sensors, flow meters, level sensors, pressure sensors, etc.), present sensing devices (e.g., inductive or capacitive proximity sensors, photoelectric sensors, ultrasonic sensors, etc.), manual operator control devices (e.g., push buttons, selector switches, etc.), safety monitoring devices (e.g., safety mats, safety pull cords, light curtains, etc.), and other such devices. Output devices may include motor drives, pneumatic actuators, signaling devices, robot controllers, valves, pumps, and the like.

Industrial controllers 118 may communicatively interface with industrial devices 120 over hardwired or networked connections. For example, industrial controllers 118 can be equipped with native hardwired inputs and outputs that communicate with the industrial devices 120 to effect control of the devices. The native controller I/O can include digital I/O that transmits and receives discrete voltage signals to and from the field devices, or analog I/O that transmits and receives analog voltage or current signals to and from the devices. The controller I/O can communicate with a controller's processor over a backplane such that the digital and analog signals can be read into and controlled by the control programs. Industrial controllers 118 can also communicate with industrial devices 120 over a network using, for example, a communication module or an integrated networking port. Exemplary networks can include the Internet, intranets, Ethernet, DeviceNet, ControlNet, Data Highway and Data Highway Plus (DH/DH+), Remote I/O, Fieldbus, Modbus, Profibus, wireless networks, serial protocols, and the like. The industrial controllers 118 can also store persisted data values that can be referenced by their associated control programs and used for control decisions, including but not limited to measured or calculated values representing operational states of a controlled machine or process (e.g., tank levels, positions, alarms, etc.) or captured time series data that is collected during operation of the automation system (e.g., status information for multiple points in time, diagnostic occurrences, etc.). Similarly, some intelligent devices - including but not limited to motor drives, instruments, or condition monitoring modules - may store data values that are used for control and/or to visualize states of operation. Such devices may also capture time-series data or events on a log for later retrieval and viewing.

Industrial automation systems often include one or more human-machine interfaces (HMIs) 114 that allow plant personnel to view telemetry and status data associated with the automation systems, and to control some aspects of system operation. HMIs 114 may communicate with one or more of the industrial controllers 118 over a plant network 116, and exchange data with the industrial controllers to facilitate visualization of information relating to the controlled industrial processes on one or more pre-developed operator interface screens. HMIs 114 can also be configured to allow operators to submit data to specified data tags or memory addresses of the industrial controllers 118, thereby providing a means for operators to issue commands to the controlled systems (e.g., cycle start commands, device actuation commands, etc.), to modify setpoint values, etc. HMIs 114 can generate one or more display screens through which the operator interacts with the industrial controllers 118, and thereby with the controlled processes and/or systems. Example display screens can visualize present states of industrial systems or their associated devices using graphical representations of the processes that display metered or calculated values, employ color or position animations based on state, render alarm notifications, or employ other such techniques for presenting relevant data to the operator. Data presented in this manner is read from industrial controllers 118 by HMIs 114 and presented on one or more of the display screens according to display formats chosen by the HMI developer. HMIs may comprise fixed location or mobile devices with either user-installed or pre-installed operating systems, and either user-installed or pre-installed graphical application software.

Some industrial environments may also include other systems or devices relating to specific aspects of the controlled industrial systems. These may include, for example, a data historian 110 that aggregates and stores production information collected from the industrial controllers 118 or other data sources, device documentation stores containing electronic documentation for the various industrial devices making up the controlled industrial systems, inventory tracking systems, work order management systems, repositories for machine or process drawings and documentation, vendor product documentation storage, vendor knowledgebases, internal knowledgebases, work scheduling applications, or other such systems, some or all of which may reside on an office network 108 of the industrial environment.

Higher-level systems 126 may carry out functions that are less directly related to control of the industrial automation systems on the plant floor, and instead are directed to long term planning, high-level supervisory control, analytics, reporting, or other such high-level functions. These systems 126 may reside on the office network 108 at an external location relative to the plant facility, or on a cloud platform with access to the office and/or plant networks. Higher-level systems 126 may include, but are not limited to, cloud storage and analysis systems, big data analysis systems, manufacturing execution systems, data lakes, reporting systems, etc. In some scenarios, applications running at these higher levels of the enterprise may be configured to analyze control system operational data, and the results of this analysis may be fed back to an operator at the control system or directly to a controller 118 or device 120 in the control system.

Maintenance and troubleshooting of a plant's industrial control systems and their associated machines and devices are typically carried out by on-site service engineers or machine operators. While some types of routine machine alarm or fault conditions can be easily addressed, unfamiliar alarm conditions or system performance issues require the service personnel to expend considerable time and effort finding resolutions to the problems. These resolution efforts may involve referencing device or software manuals or contacting a vendor's customer support personnel for assistance in diagnosing and resolving the condition.

To address at least some of these or other issues, one or more embodiments described herein provide an industrial digital insights system that leverages generative artificial intelligence (AI) techniques to suggest solutions to industrial alarm conditions or other performance problems based on earlier documented solutions, thereby expediting the process of finding alarm resolutions. The system enhances a user's prompt with relevant contextual data retrieved from stored documentation as well as relevant past chat histories to assist the system's generative AI model in recommending accurate resolutions to alarm conditions or performance issues described by the user's prompt. The system can also maintain a dynamic inventory of the industrial assets - e.g., control and monitoring devices, machines, telemetry devices, etc. - that are in use within a customer's facilities and apply generative AI analysis on the customer's asset inventory information and other contextual information to formulate insights and recommendations for maintaining acceptable performance of the customer's manufacturing systems.

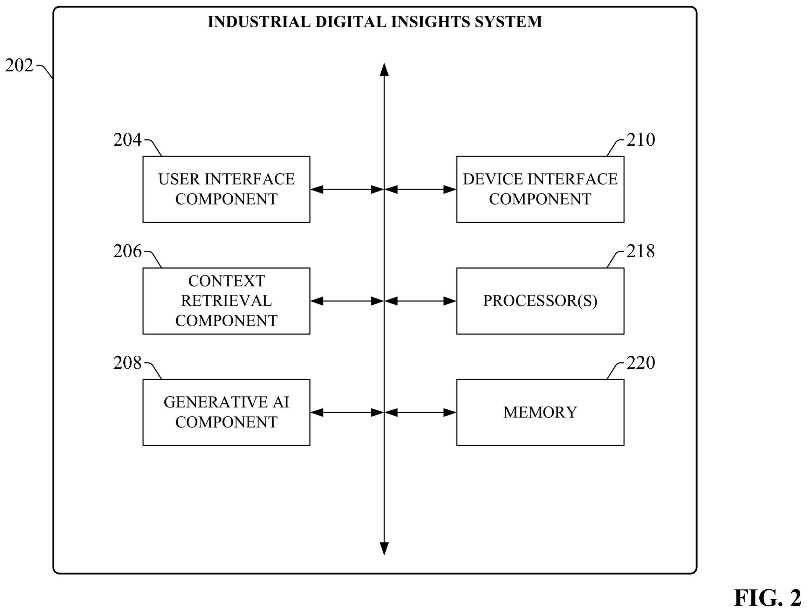

FIG. 2 is a block diagram of an example industrial digital insights system 202 according to one or more embodiments of this disclosure. Aspects of the systems, apparatuses, or processes explained in this disclosure can constitute machine-executable components embodied within machine(s), e.g., embodied in one or more computer-readable mediums (or media) associated with one or more machines. Such components, when executed by one or more machines, e.g., computer(s), computing device(s), automation device(s), virtual machine(s), etc., can cause the machine(s) to perform the operations described.

Industrial digital insights system 202 can include a user interface component 204, a context retrieval component 206, a generative AI component 208, a device interface component 210, one or more processors 218, and memory 220. In various embodiments, one or more of the user interface component 204, context retrieval component 206, generative AI component 208, device interface component 210, the one or more processors 218, and memory 220 can be electrically and/or communicatively coupled to one another to perform one or more of the functions of the industrial digital insights system 202. In some embodiments, components 204, 206, 208, and 210 can comprise software instructions stored on memory 220 and executed by processor(s) 218. Industrial digital insights system 202 may also interact with other hardware and/or software components not depicted in FIG. 2. For example, processor(s) 218 may interact with one or more external user interface devices, such as a keyboard, a mouse, a display monitor, a touchscreen, or other such interface devices.

User interface component 204 can be configured to receive user input and to render output to the user in any suitable format (e.g., visual, audio, tactile, etc.). In some embodiments, user interface component 204 can be configured to generate and serve interface displays to a client device (e.g., a laptop computer, tablet computer, smart phone, etc.) that remotely accesses the digital insights system 202 (e.g., via a hardwired or wireless connection). The user interface component 204 can then receive user input data and render output data via the client device. Input data that can be received via various embodiments of user interface component 204 can include, but is not limited to, natural language prompts or queries requesting assistance with an automation system alarm or performance conditions. Output data rendered by various embodiments of user interface component 204 can include natural language responses to user prompts as part of a chat-based technical support interaction, dynamically generated insights or recommendations for maintaining or operating a customer's industrial insights, or other such outputs.

Context retrieval component 206 can be configured to retrieve relevant context to a user's query from various data sources, including at least information regarding industrial assets in use at the customer's facilities, stored product documentation, and archived histories of previous problem resolutions. The retrieved contextual information is then combined with the user's query and analyzed using a generative AI model to assist in quickly converging on solutions or support guidance designed to address the user's issue. Generative AI component 208 can be configured to analyze the user's query and additional contextual information retrieved by the context retrieval component 206 - together with responses prompted from a generative AI model if necessary - to yield a response to the user's query in the form of insights into the problem conveyed by the query, recommended solutions to the problem, or other such insights. The generative AI component 208 can also formulate dynamic insights regarding performance and operation of the customer's automation systems and associated industrial assets without prompting from a user, based on monitoring of the assets' real-time and historical performance and maintenance. Device interface component 210 can be configured to remotely monitor real-time operational and status data from industrial devices, assets, and machines across multiple industrial facilities and customers.

The one or more processors 218 can perform one or more of the functions described herein with reference to the systems and/or methods disclosed. Memory 220 can be a computer-readable storage medium storing computer-executable instructions and/or information for performing the functions described herein with reference to the systems and/or methods disclosed.

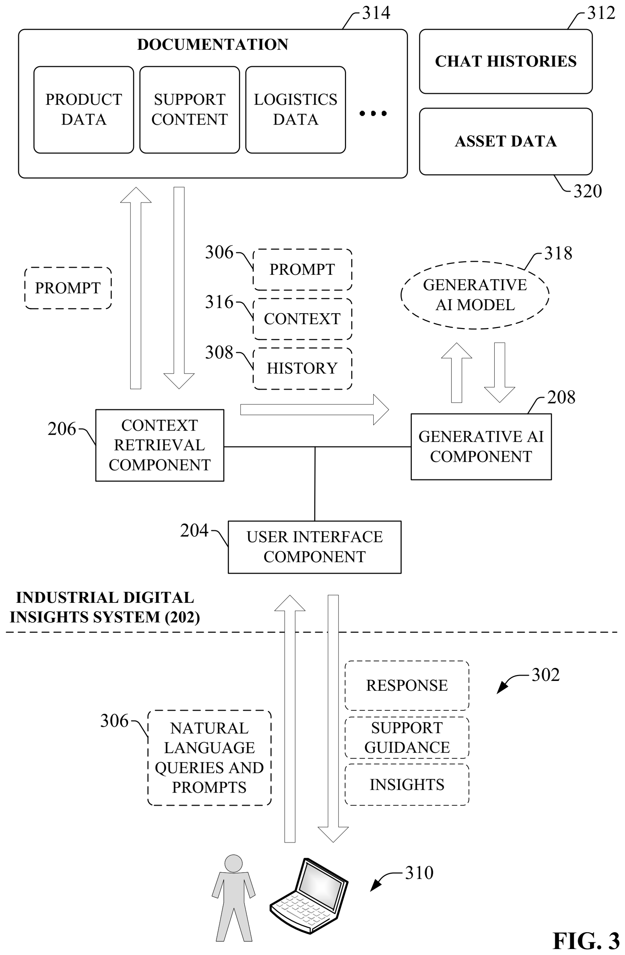

FIG. 3 is a diagram illustrating an example architecture of the industrial digital insights system 202. Some embodiments of the digital insights system 202 can be implemented on a cloud platform, as part of an Internet-of-Things (IoT) system, or on another centralized platform and made accessible to multiple industrial customers having authorized access to use the digital insights system 202. Alternatively, some embodiments of digital insights system 202 may execute at least partially on a local client device while accessing remote services and repositories as needed.

A client device 310 (e.g., a laptop computer, a tablet computer, a desktop computer, a mobile device, an HMI terminal, a wearable AR/VR appliance, etc.) owned by a user with suitable authentication credentials can access the system's support services. In some embodiments, the digital insights system 202 can be an integrated sub-system of a larger industrial monitoring, analytics, or reporting system that monitors industrial assets and manufacturing operations at multiple customer sites and provides real-time alerts or reports to those customers based on this operations tracking. Alternatively, the digital insights system 202 may be implemented as a standalone system for providing interactive support assistance to industrial customers.

Digital insights system 202 leverages generative AI technologies in connection with providing technical support guidance for addressing alarm conditions or performance issues observed on a customer's industrial machines, assets, or automation systems. To this end, system 202 includes a generative AI component 208 that leverages a generative AI model 318 to process a user's natural language prompts 306 and formulate responses or technical support guidance based on analysis of the prompts 306 as well as reference to stored documentation 314, chat histories 312 of prior technical support resolutions, and asset data 320 that identifies industrial assets that are in use within the customer's facility. The generative AI model 318 can be any of a diffusion model, a variational autoencoder (VAE), a generative adversarial network (GAN), a language-based generative model such as a large language model (LLM), a generative pre-trained transformer (GPT), a long short-term memory (LSTM) network, or other such models.

Through interaction with technical support interfaces generated by the system's user interface component 204, users can submit technical support requests or queries in the form of natural language prompts 306. In general, these prompts 306 can specify, using natural language, the nature of the technical problem for which the user requires assistance. Example prompts 306 may request information about a device or an observed automation system behavior, recommended countermeasures for observed alarms or performance issues, recommended preventative actions for mitigating future problems, or other such support guidance. These prompts 306 may include such information as a description or name of an alarm that was generated by a machine, device, or automation system (e.g., "Suggest remedy for high syslog memory alarm," "Seeing error code: 5000 what do I need to do to fix it?", etc. ); an identity of a device or system for which support is needed together with a description of the type of assistance required (e.g., "How do I replace the fan on my 755 drive?", "What is the repair time for my motor drive?", "What maintenance do I need to do for the MV6000 drive that I have had for about 4 years?", etc.); or other information describing the type of desired support assistance.

Depending on the content of the user's initial prompt 306, the generative AI component 208 may determine that the prompt 306 does not contain sufficient information for providing high-confidence technical support guidance, or that additional information from the user about the problem being observed would yield technical support guidance having a higher probability of aligning with the user's needs. In such cases, the generative AI component 208 can render, via the user interface component 204, a natural language request for additional information from the user that can be used to refine the user's initial prompt 306 prior to analysis. As part of this process, the generative AI component 208 can prompt the user for specific items of additional information that will refine or enhance the initial prompt 306 in a manner that improves the likelihood that the generative AI component 208 will generate an accurate support response that satisfies the user's requirements. In this way, the generative AI component 208 can carry out an iterative natural language dialogue with the user, prompting the user to provide sufficient details about the technical support issue to ensure that the system 202 provides highly reliable and accurate technical support guidance.

To reduce or eliminate the possibility of hallucinations or other inaccurate outputs by the generative AI model 318, the context retrieval component 206 can supplement the user's natural language prompt 306 with relevant contextual data 316 and chat history data 308 retrieved from data sources maintained by, or otherwise accessible to, the digital insights system 202. These data sources can include a repository of stored documentation 314, a repository of chat histories 312 that led to solutions to past technical support issues, and a repository of customer-specific asset data 320 that documents an inventory of industrial assets (e.g., industrial devices such as controllers or motor drives, telemetry devices, sensors, industrial machines, etc.) that are in service within the customer's industrial facility. Asset data 320 can define, for respective industrial assets, model or vendor information for the asset, a type of the asset, information regarding customer-specific configurations applied to the asset (e.g., device settings, parameter values, etc.), or other such asset information.

Stored documentation 314 that can be maintained by the system 202 and accessed by the context retrieval component 206 can include, but is not limited to, programming manuals, industrial device manuals or product specification sheets, functional specification documents, knowledgebase articles describing solutions to known problems associated with specific industrial devices or software (which may be submitted to the system 202 by vendors of those devices for storage in the documentation repository), failure code information, or other such documents. Documentation 314 may also include logistics data for one or more product vendors or support entities, including information regarding availability of products such as replacement devices or parts as well as expected shipping lead times for these products.

In some embodiments, the system 202 can maintain both a globally accessible repository of documentation 314 that is accessed by the context retrieval component 206 in response to all prompts 306 regardless of the customer entity from which the prompt 306 was received, as well as individual customer-specific repositories of documentation assigned to respective different customer entities. In such embodiments, the system 202 allows each customer entity to submit their own proprietary documentation to their assigned documentation repository for storage in their customer-specific document repository. This customer-specific documentation can include, for example, plant standards, preferred device vendors, documentation on in-house programming standards, inventory information itemizing devices or equipment that is either in use or in inventory at the customer facility, maps of the customer's industrial facilities, or other such documentation. When a prompt 306 is retrieved from a user associated with a customer entity, the context retrieval component 206 will retrieve relevant contextual data 316 one or both of the globally accessible documentation 314 and the customer-specific documentation associated with the customer entity.

Archived chat histories 312 can comprise the content of chat sessions between the system 202 and various users across multiple different customer entities. Each chat history 312 can include the prompts 306 submitted by the user during a support session, as well as the support guidance, information, or resolution recommendations generated by the generative AI component 208 (assisted, when necessary, by responses prompted from the generative AI model 318) in response to these prompts 306. In some embodiments, each chat history 312 can also record feedback that was provided by the user indicating a degree to which system's responses addressed the concern specified by the initial prompt 306. This information can be leveraged by the generative AI model 226 when formulating responses to subsequent similar prompts 306.

Asset data 320 can comprise customer-specific information identifying industrial assets that are in use within the customer's facility, as well as historical operational and status information generated by these assets. In some embodiments, each registered customer entity may be designated a customer-specific asset data repository that exclusively maintains asset data 320 collected from that customer's industrial assets (e.g., by the device interface component 210).

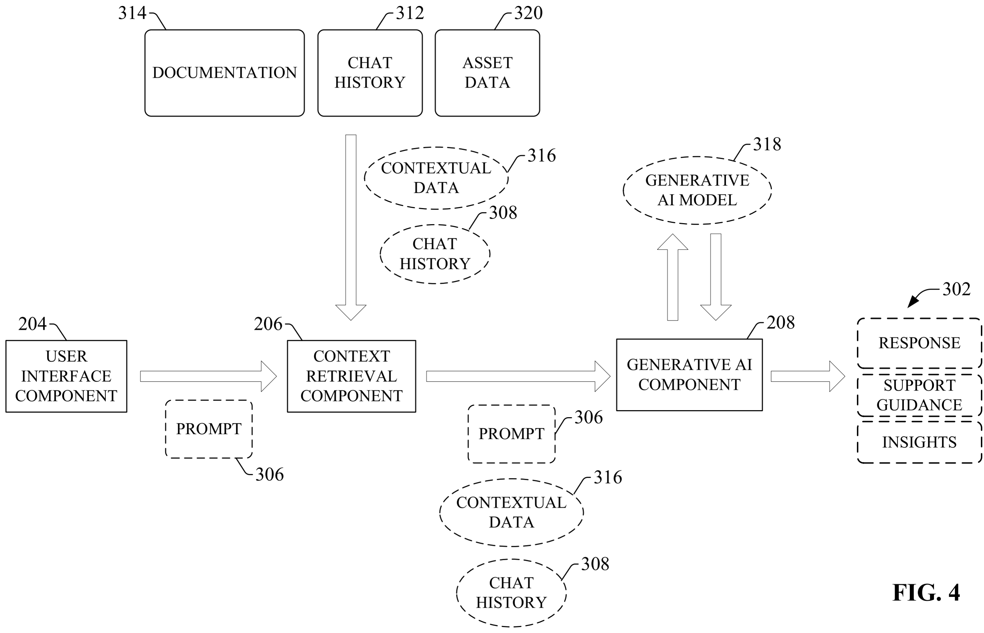

FIG. 4 is a diagram illustrating enhancement of a user prompt 306 with contextual data 316 and previous chat history data 308 prior to submission to the generative AI model 226. When a prompt 306 is received from a user associated with a customer entity (e.g., "Suggest remedy for high syslog memory alarm"), the context retrieval component 206 analyzes the content of the prompt 306 and retrieves, from the stored documentation 314, a subset of information from this stored documentation 314 determined to be relevant to the prompt 306. Depending on the nature of the prompt 306, the context retrieval component 206 can also retrieve a relevant subset of asset data 320 determined to be relevant to the prompt 306. The context retrieval component 206 then adds this retrieve documentation and/or asset information to the prompt 306 as contextual data 316. The selected subset of documentation 314 and asset data 320 information can depend on such factors as the devices, machines, or industrial assets identified in the user's prompt 306 (which may guide selection of information from corresponding product manuals or knowledgebase articles stored as part of the documentation 314, or selection of asset data 320 relating to one or more assets that are the subject of the prompt 306); the nature of the technical support request conveyed by the prompt 306; an identity of a specific alarm for which assistance is requested; or other such information.

As noted above, each registered customer entity can be assigned a customer-specific document repository in which the customer can store their own proprietary documentation. This proprietary documentation can be used by the digital insights system 202 to customize the model's responses 302 in accordance with the customer's equipment, standards, protocols, or preferences. Accordingly, when a prompt 306 is received from a user associated with a customer entity, the context retrieval component 206 can retrieve relevant contextual data 316 from one or both of the customer-agnostic set of documentation 314 and the customer-specific documentation stored for that customer entity.

Additionally, the context retrieval component 206 can identify any previous chat histories 312 stored in the archived chat histories 312 that were directed to a customer support issue determined to be similar to the issue described by the prompt 306 currently being processed, and add these similar chat histories to the prompt 306 as chat history data 308. These similar chat histories can include information regarding how technical support issues similar to that described in the prompt 306 were resolved in the past, as well as metrics regarding how well the resolutions proposed by the model 226 satisfied the users' issues (e.g., in the form of user feedback or ratings).

Once the context retrieval component 206 has enhanced the prompt 306 with relevant contextual data 316 and chat history data 308, the generative AI component 208 analyzes the combined prompt 306, contextual data 316, and chat history data 308, and generates a response 302 to the prompt based on a result of this analysis. The user interface component 204 can then render this response 302 on the user's client device 310. The nature of the response 302 depends on the type of support being requested by the prompt 306. For example, if the prompt 306 requests assistance in addressing an alarm condition on an industrial asset, the response 302 can provide a natural language explanation of the alarm together with suggested actions or steps that can be performed to correct the alarm condition. In response to a prompt 306 comprising a question about an industrial device or asset (e.g., a question regarding how to perform a specified maintenance operation on the asset, a query about an estimated amount of time required to perform the maintenance operation, a request for suggested preventative maintenance actions to be performed on the asset in order to improve a performance metric or extend the assets lifecycle, etc.), the response 302 can be a natural language answer to the user's question. In all cases, the generative AI component 208 leverages the contextual data 316 and chat history data 308 in connection with formulating the response 302, ensuring that the response 302 is catered to the specific use case conveyed by the prompt 306.

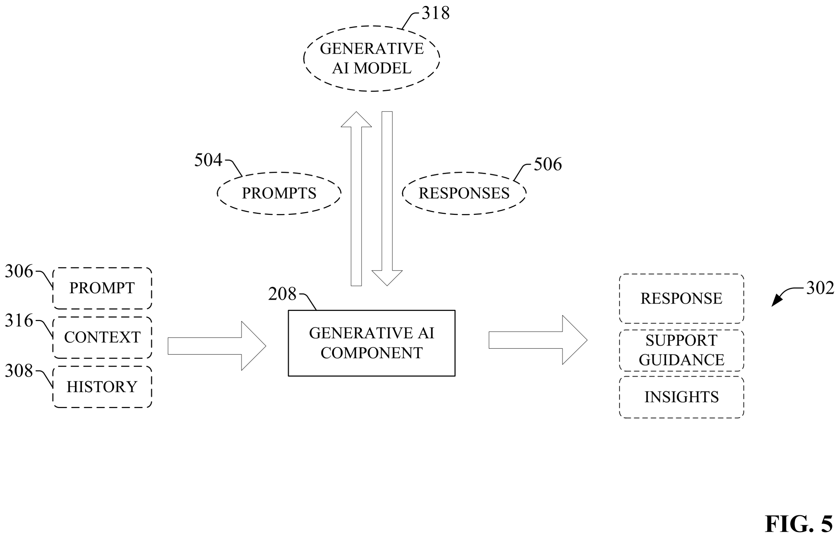

As noted above, industrial alarm monitoring system 202 can leverage generative AI to assist with alarm condition resolution, as well as with generating dynamic insights and recommendations as will be discussed in more detail below. To this end, the system's generative AI component 208 can implement prompt engineering functionality using the prompt 306, contextual data 316, and chat history 308, and can interface with a generative AI model 318 (e.g., a large language model or another type of model) and associated neural networks. FIG. 5 is a diagram illustrating prompting of the generative AI model 318 by the generative AI component 208. In some embodiments, the generative AI model 318 can reside and execute externally from the system 202, and the generative AI component 208 can include suitable connectivity tools and protocols, application programming interfaces (APIs), or other such services that allow the generative AI component 208 to exchange prompts and responses with the generative AI model 318.

When a natural language prompt 306 (see FIG. 3) is received, the generative AI component 208 can, as needed, formulate and submit prompts 504 to the generative AI model 318 designed to obtain responses 506 that assist the generative AI component 208 to generate a response 302 that satisfies the user's prompt 306 (that is, to generate a response 302 determined to have a probability of satisfying the user's prompt 306 that exceeds a defined probability level). These prompts 504 are generated based on content of the user's natural language prompt 306 as well as any industry knowledge and reference data encoded in the contextual data 316 or relevant chat history 308. The generative AI component 208 can reference content of the contextual data 316 as needed in connection with processing a user's natural language prompt 306 and prompting the generative AI model 318 for responses 506 that assist the generative AI component 208 in processing these prompts 306. The generative AI component 208 can generate the prompt 504 to include at least one of information extracted or inferred from the natural language prompt 306, an identity of an industrial asset that is the subject of the prompt 306, a description of the issue for which the user requires insight or guidance, a type of industrial application being performed by the industrial automation system to which the user's natural language prompt 306 is directed, an industrial vertical in which the industrial automation system operates, or other such information.

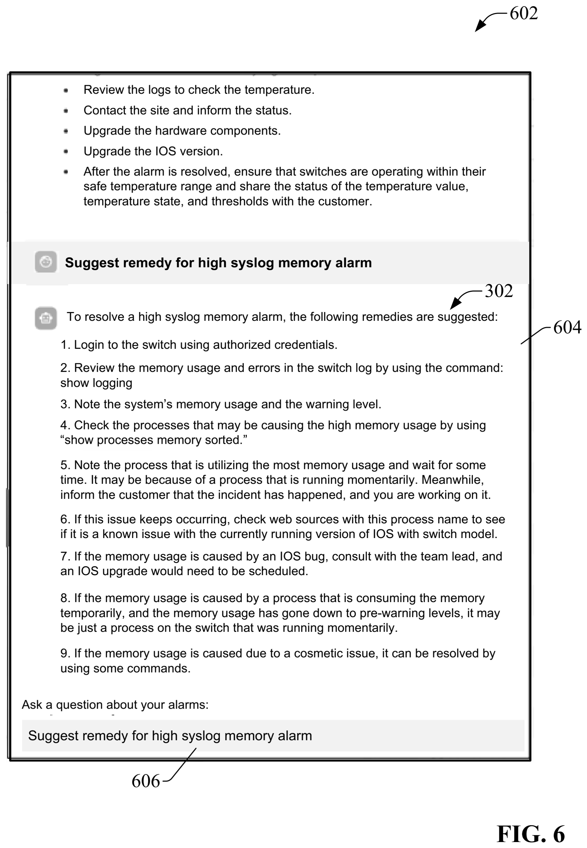

FIG. 6 is an example chat window 602 that can be generated by the user interface component 204 and used to interact with the system 202. The example chat window 602 includes a data entry field 606 through which a user can submit prompts 306 to the system 202. In the illustrated example, the user has submitted a prompt 306 requesting a remedy for a specified alarm that the user has observed on an industrial asset ("Suggest remedy for high syslog memory alarm."). In response to submission of this prompt 306, the context retrieval component 206 enhances the prompt 306 with relevant contextual data 316 and chat history data 308, and the generative AI component 208 generates its response 302 to the prompt 306 based on this aggregated information and, if deemed necessary to ensure a response 302 that accurately addresses the user's prompt 306, responses 506 prompted from the generative AI model 318, as described above in connection with FIGs. 3-5. The user interface component 204 renders the model's response 302 in a response section 604 of the chat window 602. In the illustrated example, the response 302 is in the form of a numbered and ordered list of steps to be performed in order to remedy the indicated alarm.

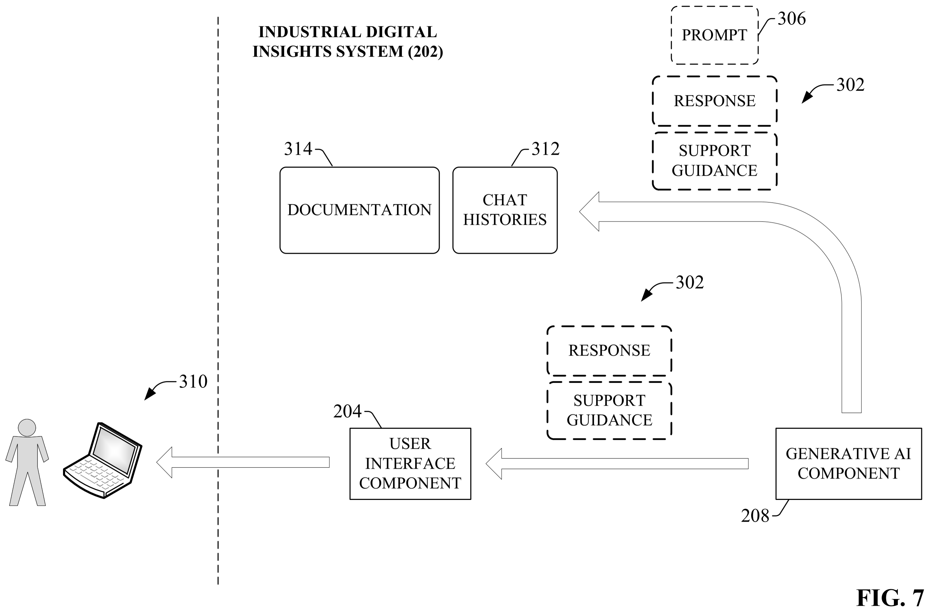

FIG. 7 is a diagram illustrating delivery and storage of the model's response 302. When the system 202 has generated a response 302 to the user's prompt 306, the response 302 is submitted to the user interface component 204 for rendering on the user's client device 310 (e.g., via window 602 illustrated in FIG. 6). Additionally, the user's prompt 306 is stored in the chat repository 312 in association with the model's responses 302 to the prompt 306, making the prompt 306 and responses 302 accessible to the context retrieval component 206 for use in refining the model's responses 302 to similar prompts 306 in the future. If the user provides feedback indicating a degree to which the model's response 302 addressed the user's issue, the generative AI component 208 can also store this feedback information in association with the prompt 306 and corresponding responses 302.

As noted above, some embodiments of the digital insights system 202 can be an integrated automated support sub-system of an industrial monitoring and notification system that monitors industrial assets and manufacturing operations for multiple, geographically diverse customer entities and delivers real-time alerts, reports, or recommendations to those customer entities based on this operations tracking. In such embodiments, in addition processing natural language prompts 306 submitted by users, the digital insights system 202 can dynamically maintain up-to-date asset data 320 that records the identities and status of industrial assets in use at the customer's facilities, as well as status and operational data generated by these industrial assets during operation. The system 202 can apply generative AI analysis to this asset data 320 to provide customer-specific insights or support guidance designed to assist with asset management, risk mitigation, and plant security.

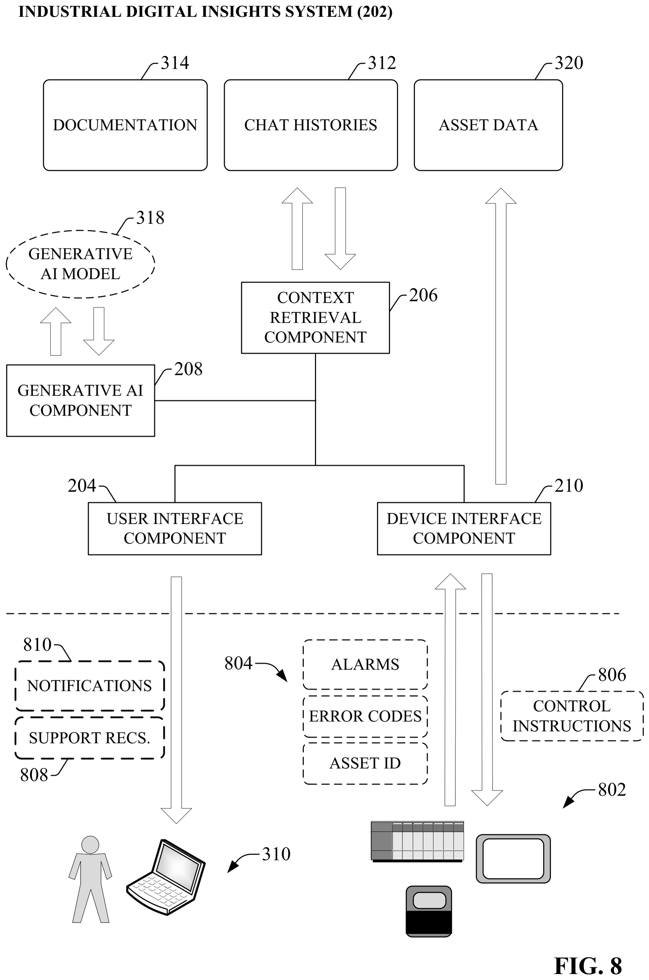

FIG. 8 is a diagram illustrating an example architecture in which the context retrieval component 206 and generative AI component 208 are used to detect and respond to alarms or other industrial asset performance issues in substantially real-time. In this example architecture, the digital insights system 202 includes a device interface component 210 configured to remotely monitor or collect runtime data 804 from industrial assets 802 (e.g., industrial devices such as controllers 118, motor drives, telemetry devices, sensors, network infrastructure devices such as switches or routers, etc.) that make up automation systems operating within plant facilities. This runtime data 804 can comprise identification information for the assets 802 (e.g., a product serial number, an asset name, a device vendor and model, etc.), as well as operational and status data generated by these industrial assets during operation of their associated automation systems. The device interface component 210 and its associated services can monitor industrial assets 802 across multiple facilities owned by different customer entities who are registered to use the digital insights system 202. This runtime embodiment of the digital insights system 202 provides proactive generative AI-assisted notifications and support guidance to those customer entities based on monitoring and analysis of their respective sets of runtime data 804. Device interface component 210 can remotely access customer's industrial assets 802 over any secure communication path, via any intervening public or private networks.

At least some of the runtime data 804 monitored by the system 202 comprises alarm data generated by the industrial assets 802. This alarm data signifies an abnormal status or condition experienced by an industrial asset 802, and can include information identifying the nature of the alarm (e.g., an alarm number or description, an error code, etc.). As runtime data 804 is collected from industrial assets 802 by the device interface component 210 during operation of their corresponding automation systems, any alarm conditions detected in the data 804 are processed by the context retrieval component 206 and generative AI component 208 in a manner similar to that described above for processing user-provided prompts 306. Specifically, the context retrieval component 206 retrieves contextual data 316 and chat history data 308 determined to be relevant to the detected alarm condition, based on the nature of the alarm condition (e.g., the alarm description or its associated alarm or error code) as well as the identity of the industrial asset 802 experiencing the alarm condition. The contextual data 316 retrieved for a given alarm condition may include, for example, additional information about the alarm condition or relevant troubleshooting information obtained from a product manual for the industrial asset. Relevant chat history data 308 retrieved in response to detection of the alarm condition may include past dialogs between users and the generative AI component 208 in connection with resolving the same or similar alarm conditions experienced on similar industrial assets. The alarm information collected from the industrial asset is then provided to the generative AI component 208 together with the retrieved contextual data 316 and chat history data 308, and the generative AI component 208 - leveraging the generative AI model 318 as needed - generates recommended actions or support guidance for addressing the alarm condition based on analysis of this aggregated information. The user interface component 204 can then deliver proactive notifications 810 of the alarm condition to client devices 310 associated with relevant plant personnel (e.g., personnel responsible for maintaining the industrial asset experiencing the alarm condition) together with the recommendations or guidance for addressing the condition. The support guidance generated by the generative AI component 208 can include, for example, descriptions of steps to be taken to resolve the root cause of the alarm condition and clear the alarm (which may include navigational instructions directing the user to the location of the asset), recommendations for replacing an asset if the alarm condition cannot be resolved, directions or other such information.

In some embodiments, in addition to or as an alternative to providing support guidance, the generative AI component 208 and device interface component 210 can send control instructions 806 to the industrial assets 802 in response to detection of an alarm condition and determination of a corresponding countermeasure by the generative AI component 208. These control instructions 806 can be designed to implement at least a portion of the corrective countermeasures determined by the generative AI component 208, and can comprise, for example, instructions to modify a setpoint of a controlled industrial process, instructions to change an operating mode of a device or a machine (e.g., switching a machine to a safe state, such as a stopped or slow operating mode), instructions to change a speed of a process or motion control device in a manner that mitigates an impact of the abnormal condition conveyed by the alarm, or other such instructions. In some scenarios, the control instructions 806 can initiate their control actions by remotely altering values of analog or digital data tags or registers of industrial controllers or other industrial devices in order to implement the corrective measures devised by the generative AI component 208.

Some embodiments of the digital insights system 202 can further cater the model's responses 302 to user prompts 306, recommended support guidance, or control instructions 806 based on unique environmental or contextual conditions in which the relevant industrial assets 802 operate. For example, it may be the case that industrial assets 802 or machines that operate in warmer locations or in plant facilities having relatively high levels of particulates in the air are more susceptible to certain alarm conditions or operational issues than similar assets or devices operating in other types of climates or environments. As such, countermeasures for alarm conditions that arise on assets within these types of environments may be different than those generated for similar assets in other environments. The generative AI component 208 can generate responses 302 or control instructions 806 for addressing alarm conditions for these industrial assets 802 that take these contextual factors into consideration.

To this end, the device interface component 210 can store, as part of asset data 320, runtime collected from the industrial assets 802 in a cloud-based asset data repository. In some embodiments, each registered customer entity may be designated a customer-specific asset data repository that exclusively maintains runtime data collected from that customer's industrial assets 802. The generative AI component 208 can analyze this collected asset data 320 - including historical runtime data - to learn operational or alarm trends for individual industrial assets 802 that may deviate from the trends typically expected for similar industrial assets 802, which may indicate a contextual factor of the asset's environment that affects the asset's performance. When a user submits a prompt 306 relating to an industrial asset 802, or when an alarm condition is detected in the asset's runtime data (stored as part of asset data 320), the context retrieval component 206 can retrieve relevant contextual data 316 and chat history data 308 for the prompt 306 or alarm as described above, and the generative AI component 208 can analyze this aggregated information together with learned performance trends for the individual asset as learned from the asset's stored asset data 320, and formulate the response 302 to the prompt 306 (or the countermeasure to the detected alarm condition) based on this analysis.

Since the digital insights system 202 can dynamically document each customer's collection of industrial assets 802 as asset data 320, the system's generative AI component 208 can apply generative AI analysis to this collected asset data 320 to formulate customer-specific asset management insights, as well as recommendations 808 for mitigating or minimizing machine downtime or security risks given the customer's collection of industrial assets 802 and the manner in which those assets are being used. For example, in some embodiments the device interface component 210 can, based on the asset identification information collected from the industrial assets 802 as well as any relevant supplemental information (such as geotag information, plant documentation, or other such information), record the identities, locations, and functions of the customer's industrial assts 802 as part of asset data 320. This can include recording the identities of the industrial assets 802, locations of the assets 802 (including the plant facility and the location within the facility at which each asset is located), functional relationships between the assets 802, production lines or machines in which the respective assets 802 operate, or other such information. This aggregated asset data 320 can serve as an up-to-date inventory or asset base for the customer.

The generative AI component 208 can perform generative AI-assisted analysis on this collected asset data 320 - leveraging relevant contextual data 316 and responses 506 prompted from the generative AI model 318 as needed (see FIG. 5) - and identify, based on results of this analysis, potential risks that can be mitigated through asset management practices. Identification of such risks can be based in part on a learned understanding of the customer's various manufacturing systems - including the types of processes carried out by the respective manufacturing systems and the dependency relationships between the manufacturing systems - and the roles played by the respective assets 802 in the functioning of those manufacturing systems. For example, the generative AI component 208 can learn, based on analysis of the asset data 320, relevant subsets of documentation 314, and responses 506 prompted from the generative AI model 318, which of the customer's manufacturing systems or machines produce parts or materials that are used by other downstream manufacturing systems, as well as which other manufacturing systems require those parts and materials. As noted above, the generative AI component 208 can also learn which of the customer's industrial assets 802 are associated with each manufacturing system or machine, and the functional roles of those industrial assets 802.

Based on this learned knowledge of the customer's assets 802 and their functions, the generative AI component 208 can determine relative criticalities of the respective assets 802 to the customer's overall production goals, and infer levels of risk associated with failure of those critical assets 802 (e.g., a risk of excessive machine downtime, a risk of lost profits due to loss of productivity, etc.). Based on these inferred risks, the generative AI component 208 can further formulate a recommendation 808 for the customer to stock replacements for selected assets 802 (e.g., industrial devices, parts, machine components, etc.), where these assets 802 are selected based on their criticality to the customer's operations or the high level of risk posed by failure of those specified assets 802. Based on this analysis, the system 202 can also generate and render a list of the customer's most vulnerable or most critical assets 802, together with recommendations for asset management actions designed to mitigate asset vulnerabilities or to ensure optimal and uninterrupted performance of the most critical assets.

Based on similar generative AI-assisted analysis, the generative AI component 208 can also identify potential cybersecurity risks associated with one or more assts 802, and formulate recommendations 808 for countermeasures predicted to mitigate these risks (e.g., installation of updated firmware on the relevant assets 802, replacement of one or more assets 802 with different but functionally similar assets that are not subject to the cybersecurity risk, etc.). Such recommendations 808 can be rendered on the user's client device 310 by the user interface component 204 as a natural language message describing the recommendation and identifying the assets 802 that are subject to the recommendations.

Example asset management recommendations 808 that can be generated by the system 202 based on such generative AI-analysis of the user's asset data 320 can include, but are not limited to, recommendations to stock a specified number of backup instances of an asset 802 or associated component or device, recommendations to upgrade the firmware on one or more assets 802, recommendations to modify one or more configuration parameters on an asset 802, recommendations to alter an asset's operating schedule or that of the asset's associated automation system or machine, recommendations to perform a preventative maintenance action on a specified asset to extend the asset's operating life, or other such recommendations. The digital insights system 202 can formulate these recommendations 808 to reduce or eliminate potential asset-related risks predicted by the system 202, or to otherwise satisfy a criterion determined to be beneficial to the customer, such as reduction of excessive loss of production or revenue, reduction of excessive machine downtime, extension of an asset's lifecycle, or other such criteria.

As part of the generative AI analysis applied to the asset data 320, the generative AI component 208 can, as needed, retrieve and analyze relevant subsets of stored documentation 314 (e.g., information retrieved from product manuals or specification sheets for industrial assets identified by the asset data 320, archived chat histories 312 from which potential asset risks may be identified or that may suggest useful countermeasure for mitigating a particular type of security or operational risk, etc.). The generative AI component 208 can also generate prompts 504 (see FIG. 5) directed to the generative AI model 318 designed to obtain responses 506 that can be used to either identify a potential risk given the collection and functions of the industrial assets identified by the customer's asset data 320 or to formulate a recommended countermeasure predicted to reduce or eliminate a specific risk identified by the generative AI component 208. These prompts 504 can be generated based on selected content of the asset data 320 and any relevant contextual data 316 retrieved by the context retrieval component 206.

In some embodiments, in addition to or as an alternative to rendering asset management recommendations 808, the generative AI component 208 and device interface component 210 can send control instructions 806 to the industrial assets 802 that automatically implement one or more of the recommendations 808 formulated by the system for mitigating a detected risk. Such control instructions 806 can, for example, modify a configuration parameter of a selected industrial device 802 or asset, change an operating mode of an industrial asset, modify a control setpoint or other control parameter on an industrial asset 802, or perform other such control or configuration actions.

In some embodiments, the digital insights system 202 can also, based on analysis of the customer's asset data 320, identify services offered by a service provider that may be of benefit to the customer, or that are otherwise relevant to the collection of industrial assets 808 maintained by the customer or their functional relationship, and generate a recommendation 808 proposing these services. These recommended services may include, for example, network or asset security services, auditing services, field maintenance services, upgrade assessment services, or other such services. In some scenarios, the system 202 can identify potentially beneficial services based not only on the identities of the customer's assets and their functional relationships, but also on a history of the assets' production or usage activity as recorded in the asset data 320 (based on time-series operational and status data generated by the assets 802 and monitored by the device interface component 210).

The industrial digital insights system 202 described herein can expedite the process of finding resolutions to asset performance issues or alarm conditions by leveraging generative AI together with selected contextual data determined to be relevant to the issue being addressed. The system's generative AI model leverages multiple data sources to augment its knowledgebase, and these data sources remain updated with recent documentation and resolution notes to ensure continued accuracy of support guidance and corrective countermeasures.

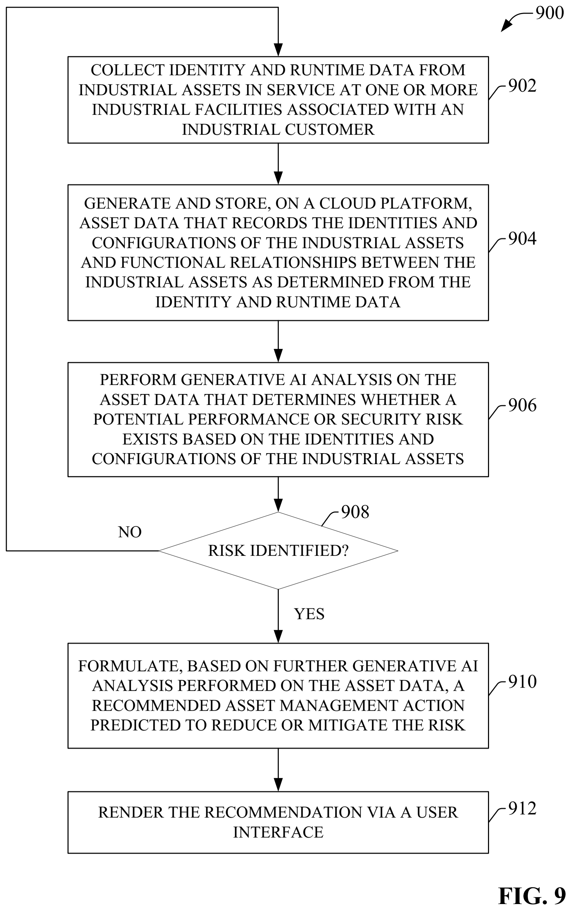

FIG. 9 illustrates a methodology in accordance with one or more embodiments of the subject application. While, for purposes of simplicity of explanation, the methodology shown herein is shown and described as a series of acts, it is to be understood and appreciated that the subject innovation is not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation. Furthermore, interaction diagram(s) may represent methodologies, or methods, in accordance with the subject disclosure when disparate entities enact disparate portions of the methodologies. Further yet, two or more of the disclosed example methods can be implemented in combination with each other, to accomplish one or more features or advantages described herein.

FIG. 9 illustrates an example methodology 900 for generating and delivering dynamic asset management recommendations using generative AI-assisted analysis. Initially, at 902, identity and runtime data is collected from industrial assets that are in service at one or more industrial facilities associated with an industrial customer. This data can be collected and managed, for example, by a cloud-based digital insights system that maintains an inventory record of the customer's industrial assets (e.g., industrial monitoring and control devices, machines, production lines, etc.) and generates customer-specific dynamic insights and asset management recommendations based on analysis of this asset information. At 904, the system generates and stores asset data that records the identities and configurations of the industrial assets, as well as learned functional relationships between the assets, as determined from the identity and runtime data collected at step 902.

At 906, generative AI analysis is performed on the asset data stored at step 904, where this analysis is designed to determine whether a potential performance or security risk exists based on the identities and configurations of the industrial assets. In some scenarios, this determination can be further based on historical runtime data collected from the assets (e.g., histories of alarms or downtime conditions, histories of product throughputs, etc.), asset documentation stored in a cloud-based repository (e.g., programming manuals, industrial device manuals or product specification sheets, functional specification documents, knowledgebase articles describing solutions to known problems associated with specific industrial devices or software, failure code information, etc.), or other such information maintained by the digital insights system.

At 908, a determination is made as to whether a risk is identified based on the analysis performed at 906. If no risk is identified (NO at step 908), the methodology returns to step 902, and steps 902-908 are repeated. If a risk is identified (YES at step 908), the methodology proceeds to step 910 where, based on further generative AI analysis performed on the asset data (and any supplemental information maintained by the system, such as asset documentation), a recommended asset management action predicted to reduce or mitigate the risk is formulated. The recommendation may propose, for example, maintaining a stock of replacements for a specified asset, replacing an asset with a different but functionally similar asset that reduces the detected risk, modifying an operating schedule of a production line or machine, updating firmware or other software on a specified asset, modifying a configuration or security parameter on a specified asset, performing specified type of preventative maintenance on an asset, or other such recommendations. At 912, the recommendation is rendered via a user interface on a client device associated with the customer.

Embodiments, systems, and components described herein, as well as control systems and automation environments in which various aspects set forth in the subject specification can be carried out, can include computer or network components such as servers, clients, programmable logic controllers (PLCs), automation controllers, communications modules, mobile computers, on-board computers for mobile vehicles, wireless components, control components and so forth which are capable of interacting across a network. Computers and servers include one or more processors-electronic integrated circuits that perform logic operations employing electric signals-configured to execute instructions stored in media such as random access memory (RAM), read only memory (ROM), a hard drives, as well as removable memory devices, which can include memory sticks, memory cards, flash drives, external hard drives, and so on.

Similarly, the term PLC (programmable logic controller) or automation controller as used herein can include functionality that can be shared across multiple components, systems, and/or networks. As an example, one or more PLCs or automation controllers can communicate and cooperate with various network devices across the network. This can include substantially any type of control, communications module, computer, Input/Output (I/O) device, sensor, actuator, and human machine interface (HMI) that communicate *via* the network, which includes control, automation, and/or public networks. The PLC or automation controller can also communicate to and control various other devices such as standard or safety-rated I/O modules including analog, digital, programmed/intelligent I/O modules, other programmable controllers, communications modules, sensors, actuators, output devices, and the like.

The network can include public networks such as the internet, intranets, and automation networks such as control and information protocol (CIP) networks including DeviceNet, ControlNet, safety networks, and Ethernet/IP. Other networks include Ethernet, DH/DH+, Remote I/O, Fieldbus, Modbus, Profibus, CAN, wireless networks, serial protocols, and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

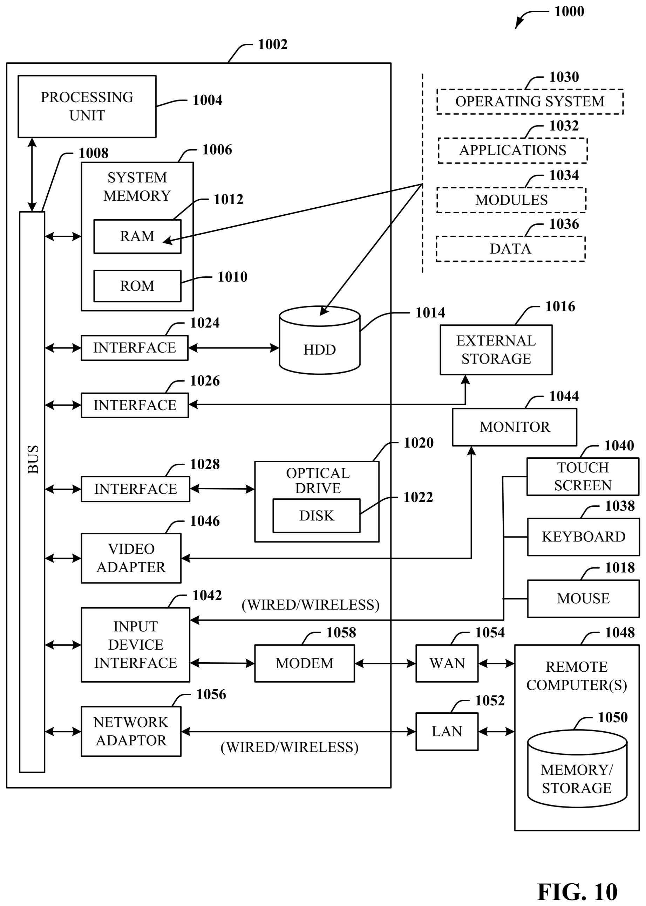

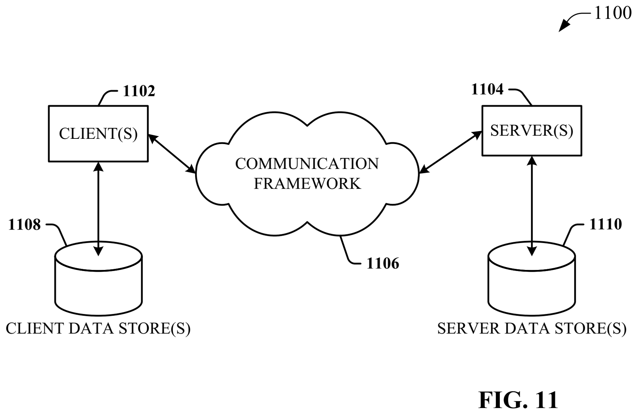

In order to provide a context for the various aspects of the disclosed subject matter, FIGs. 10 and 11 as well as the following discussion are intended to provide a brief, general description of a suitable environment in which the various aspects of the disclosed subject matter may be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multiprocessor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 10, the example environment 1000 for implementing various embodiments of the aspects described herein includes a computer 1002, the computer 1002 including a processing unit 1004, a system memory 1006 and a system bus 1008. The system bus 1008 couples system components including, but not limited to, the system memory 1006 to the processing unit 1004. The processing unit 1004 can be any of various commercially available processors. Dual microprocessors and other multi-processor architectures can also be employed as the processing unit 1004.

The system bus 1008 can be any of several types of bus structure that can further interconnect to a memory bus (with or without a memory controller), a peripheral bus, and a local bus using any of a variety of commercially available bus architectures. The system memory 1006 includes ROM 1010 and RAM 1012. A basic input/output system (BIOS) can be stored in a non-volatile memory such as ROM, erasable programmable read only memory (EPROM), EEPROM, which BIOS contains the basic routines that help to transfer information between elements within the computer 1002, such as during startup. The RAM 1012 can also include a high-speed RAM such as static RAM for caching data.

The computer 1002 further includes an internal hard disk drive (HDD) 1014 (e.g., EIDE, SATA), one or more external storage devices 1016 (e.g., a magnetic floppy disk drive (FDD) 1016, a memory stick or flash drive reader, a memory card reader, etc.) and an optical disk drive 1020 (e.g., which can read or write from a CD-ROM disc, a DVD, a BD, etc.). While the internal HDD 1014 is illustrated as located within the computer 1002, the internal HDD 1014 can also be configured for external use in a suitable chassis (not shown). Additionally, while not shown in environment 1000, a solid state drive (SSD) could be used in addition to, or in place of, an HDD 1014. The HDD 1014, external storage device(s) 1016 and optical disk drive 1020 can be connected to the system bus 1008 by an HDD interface 1024, an external storage interface 1026 and an optical drive interface 1028, respectively. The interface 1024 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 1002, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 1012, including an operating system 1030, one or more application programs 1032, other program modules 1034 and program data 1036. All or portions of the operating system, applications, modules, and/or data can also be cached in the RAM 1012. The systems and methods described herein can be implemented utilizing various commercially available operating systems or combinations of operating systems.

Computer 1002 can optionally comprise emulation technologies. For example, a hypervisor (not shown) or other intermediary can emulate a hardware environment for operating system 1030, and the emulated hardware can optionally be different from the hardware illustrated in FIG. 10. In such an embodiment, operating system 1030 can comprise one virtual machine (VM) of multiple VMs hosted at computer 1002. Furthermore, operating system 1030 can provide runtime environments, such as the Java runtime environment or the .NET framework, for application programs 1032. Runtime environments are consistent execution environments that allow application programs 1032 to run on any operating system that includes the runtime environment. Similarly, operating system 1030 can support containers, and application programs 1032 can be in the form of containers, which are lightweight, standalone, executable packages of software that include, e.g., code, runtime, system tools, system libraries and settings for an application.

Further, computer 1002 can be enable with a security module, such as a trusted processing module (TPM). For instance with a TPM, boot components hash next in time boot components, and wait for a match of results to secured values, before loading a next boot component. This process can take place at any layer in the code execution stack of computer 1002, e.g., applied at the application execution level or at the operating system (OS) kernel level, thereby enabling security at any level of code execution.

A user can enter commands and information into the computer 1002 through one or more wired/wireless input devices, e.g., a keyboard 1038, a touch screen 1040, and a pointing device, such as a mouse 1018. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 1004 through an input device interface 1044 that can be coupled to the system bus 1008, but can be connected by other interfaces, such as a parallel port, an IEEE 1394 serial port, a game port, a USB port, an IR interface, a BLUETOOTH^{®} interface, etc.

A monitor 1044 or other type of display device can be also connected to the system bus 1008 via an interface, such as a video adapter 1046. In addition to the monitor 1044, a computer typically includes other peripheral output devices (not shown), such as speakers, printers, etc.

The computer 1002 can operate in a networked environment using logical connections via wired and/or wireless communications to one or more remote computers, such as a remote computer(s) 1048. The remote computer(s) 1048 can be a workstation, a server computer, a router, a personal computer, portable computer, microprocessor-based entertainment appliance, a peer device or other common network node, and typically includes many or all of the elements described relative to the computer 1002, although, for purposes of brevity, only a memory/storage device 1050 is illustrated. The logical connections depicted include wired/wireless connectivity to a local area network (LAN) 1052 and/or larger networks, e.g., a wide area network (WAN) 1054. Such LAN and WAN networking environments are commonplace in offices and companies, and facilitate enterprise-wide computer networks, such as intranets, all of which can connect to a global communications network, e.g., the Internet.

When used in a LAN networking environment, the computer 1002 can be connected to the local network 1052 through a wired and/or wireless communication network interface or adapter 1056. The adapter 1056 can facilitate wired or wireless communication to the LAN 1052, which can also include a wireless access point (AP) disposed thereon for communicating with the adapter 1056 in a wireless mode.

When used in a WAN networking environment, the computer 1002 can include a modem 1058 or can be connected to a communications server on the WAN 1054 via other means for establishing communications over the WAN 1054, such as by way of the Internet. The modem 1058, which can be internal or external and a wired or wireless device, can be connected to the system bus 1008 via the input device interface 1042. In a networked environment, program modules depicted relative to the computer 1002 or portions thereof, can be stored in the remote memory/storage device 1050. It will be appreciated that the network connections shown are example and other means of establishing a communications link between the computers can be used.

When used in either a LAN or WAN networking environment, the computer 1002 can access cloud storage systems or other network-based storage systems in addition to, or in place of, external storage devices 1016 as described above. Generally, a connection between the computer 1002 and a cloud storage system can be established over a LAN 1052 or WAN 1054 e.g., by the adapter 1056 or modem 1058, respectively. Upon connecting the computer 1002 to an associated cloud storage system, the external storage interface 1026 can, with the aid of the adapter 1056 and/or modem 1058, manage storage provided by the cloud storage system as it would other types of external storage. For instance, the external storage interface 1026 can be configured to provide access to cloud storage sources as if those sources were physically connected to the computer 1002.

The computer 1002 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

FIG. 11 is a schematic block diagram of a sample computing environment 1100 with which the disclosed subject matter can interact. The sample computing environment 1100 includes one or more client(s) 1102. The client(s) 1102 can be hardware and/or software (e.g., threads, processes, computing devices). The sample computing environment 2100 also includes one or more server(s) 1104. The server(s) 1104 can also be hardware and/or software (e.g., threads, processes, computing devices). The servers 1104 can house threads to perform transformations by employing one or more embodiments as described herein, for example. One possible communication between a client 1102 and servers 1104 can be in the form of a data packet adapted to be transmitted between two or more computer processes. The sample computing environment 1100 includes a communication framework 1106 that can be employed to facilitate communications between the client(s) 1102 and the server(s) 1104. The client(s) 1102 are operably connected to one or more client data store(s) 1108 that can be employed to store information local to the client(s) 1102. Similarly, the server(s) 1104 are operably connected to one or more server data store(s) 1110 that can be employed to store information local to the servers 1104.

What has been described above includes examples of the subject innovation. It is, of course, not possible to describe every conceivable combination of components or methodologies for purposes of describing the disclosed subject matter, but one of ordinary skill in the art may recognize that many further combinations and permutations of the subject innovation are possible. Accordingly, the disclosed subject matter is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the disclosed subject matter. In this regard, it will also be recognized that the disclosed subject matter includes a system as well as a computer-readable medium having computer-executable instructions for performing the acts and/or events of the various methods of the disclosed subject matter.

In addition, while a particular feature of the disclosed subject matter may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

In this application, the word "exemplary" is used to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

Various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (e.g., hard disk, floppy disk, magnetic strips...), optical disks [e.g., compact disk (CD), digital versatile disk (DVD)...], smart cards, and flash memory devices (e.g., card, stick, key drive...).

## Claims

1. A system, comprising:
a memory that stores executable components; and
a processor, operatively coupled to the memory, that executes the executable components, the executable components comprising:
a device interface component configured to collect identification data from industrial assets in operation within an industrial facility and to record asset data identifying the industrial assets and functional relationships between the industrial assets based on the identification data;
a generative artificial intelligence (AI) component configured to, based on analysis of the asset data and a response prompted from a generative AI model, identify a potential operational or security risk associated with the industrial assets and a corresponding recommended action predicted to mitigate the potential operational or security risk; and
a user interface component configured to render, on a client device, the recommended action as a natural language recommendation.

2. The system of claim 1, further comprising a context retrieval component configured to retrieve contextual data determined to be relevant to the industrial assets or the functional relationships between the industrial assets from a repository of industrial documentation,
wherein the generative AI component is configured to identify the potential operational or security risk or the corresponding recommended action further based on analysis of the contextual data.

3. The system of claim 2, wherein
the generative AI component is configured to, as part of the analysis of the asset data, formulate a prompt directed to the generative AI model and designed to obtain, as the response from the generative AI model, information used by the generative AI component to determine the potential operational or security risk or to formulate the recommended action, and
the generative AI component generates the prompt based on analysis of the asset data and the contextual data retrieved from the repository of stored documentation.

4. The system of claim 2 or 3, wherein the industrial documentation stored in the repository of industrial documentation comprises at least one of programming manuals, industrial device manuals, industrial device product specification documents, functional specification documents, knowledgebase articles describing solutions to problems associated with industrial devices or software, or failure code documentation.

5. The system of one of claims 1 to 4, at least one of:
wherein the potential operational or security risk is at least one of a security vulnerability, a risk of excessive machine downtime, a risk of lost profits due to loss of productivity, or a risk of a shortened lifecycle of one or more of the industrial assets; and
wherein the recommended action is at least one of a recommendation to stock a replacement for one or more of the industrial assets, a recommendation to install updated firmware on one or more of the industrial assets, a recommendation to replacement of one or more of the industrial assets, a recommendation to modify a configuration parameter of one or more of the industrial assets, a recommendation to change an operating mode of one or more of the industrial assets, a recommendation to modify a control setpoint of one or more of the industrial assets, or a recommendation to modify a network setting of one or more of the industrial assets.

6. The system of one of claims 1 to 5, wherein
the generative AI component is further configured to, based on analysis of the asset data, determine a vendor service that is relevant to the industrial assets or the functional relationships between the industrial assets, and
the user interface component is configured to render, on the client device, a recommendation proposing the vendor service.

7. The system of claim 6, wherein the vendor service is at least one of a network security service, an asset security service, an auditing service, a field maintenance service, or an upgrade assessment services.

8. The system of one of claims 1 to 7, wherein the device interface component is further configured to generate a control instruction directed to an industrial asset, of the industrial assets, that initiates the recommended action.

9. The system of claim 8, wherein the control instruction is at least one of an instruction to modify a setpoint of a controlled industrial process, an instruction to change an operating mode of a device or a machine, or an instruction to change a speed of a controlled industrial process.

10. A method, comprising:
collecting, by a system comprising a processor, identification data from industrial assets in operation within an industrial facility and to record asset data identifying the industrial assets and functional relationships between the industrial assets based on the identification data;
identifying, by the system based on analysis of the asset data and a response prompted from a generative artificial intelligence (AI) model, a potential operational or security risk associated with the industrial assets and a corresponding recommended countermeasure predicted to mitigate the potential operational or security risk; and
rendering, by the system on a client device, the recommended countermeasure as a natural language recommendation.

11. The method of claim 10, wherein the identifying comprises:
retrieving contextual data determined to be relevant to the industrial assets or the functional relationships between the industrial assets from a repository of industrial documentation; and
identifying the potential operational or security risk or the corresponding recommended action further based on analysis of the contextual data.

12. The method of claim 11, at least one of:
further comprising, as part of the analysis, formulating a prompt directed to the generative AI model and designed to obtain, as the response from the generative **AI** model, information used by the system to determine the potential operational or security risk or to formulate the recommended action,
wherein the formulating of the prompt is based on analysis of the asset data and the contextual data retrieved from the repository of stored documentation; and
wherein the industrial documentation stored in the repository of industrial documentation comprises at least one of programming manuals, industrial device manuals, industrial device product specification documents, functional specification documents, knowledgebase articles describing solutions to problems associated with industrial devices or software, or failure code documentation.

13. The method of one of claims 10 to 12, at least one of:
wherein the potential operational or security risk is at least one of a security vulnerability, a risk of excessive machine downtime, a risk of lost profits due to loss of productivity, or a risk of a shortened lifecycle of one or more of the industrial assets;
wherein the recommended countermeasure is at least one of stocking a replacement for one or more of the industrial assets, installing updated firmware on one or more of the industrial assets, replacing one or more of the industrial assets, modifying a configuration parameter of one or more of the industrial assets, changing an operating mode of one or more of the industrial assets, modifying a control setpoint of one or
more of the industrial assets, or modifying a network setting of one or more of the industrial assets; and
the method further comprising
determining, based on analysis of the asset data, a vendor service that is relevant to the industrial assets or the functional relationships between the industrial assets; and
rendering, on the client device, a recommendation proposing the vendor service, wherein preferably the vendor service is at least one of a network security service, an asset security service, an auditing service, a field maintenance service, or an upgrade assessment services.

14. A non-transitory computer-readable medium having stored thereon instructions that, in response to execution, cause a system comprising a processor to perform operations, the operations comprising:
collecting identification data from industrial assets in operation within an industrial facility and to record asset data identifying the industrial assets and functional relationships between the industrial assets based on the identification data;
identifying, based on analysis of the asset data and a response prompted from a generative artificial intelligence (AI) model, a potential operational or security risk associated with the industrial assets and a corresponding recommended countermeasure predicted to mitigate the potential operational or security risk; and
rendering, on a client device, the recommended countermeasure as a natural language recommendation.

15. The non-transitory computer-readable medium of claim 14, wherein the identifying comprises:
retrieving contextual data determined to be relevant to the industrial assets or the functional relationships between the industrial assets from a repository of industrial documentation; and
identifying the potential operational or security risk or the corresponding recommended action further based on analysis of the contextual data.
